# EUROPÄISCHE PATENTSCHRIFT

(11) **EP 0 470 467 B1**
(45) Veröffentlichungstag und Bekanntmachung des Hinweises auf die Patenterteilung: **14.09.1994**
(21) Anmeldenummer: 91112643.1
(22) Anmeldetag: 27.07.1991
(51) Int. Cl.: A01K 27/00

(54) **Mittel zur Bekämpfung von Flöhen**
Agent for flea-controlling
Agent de lutte contre les puces

(30) Priorität: 10.08.1990 DE 4025345
(43) Veröffentlichungstag der Anmeldung: 12.02.1992
(73) Patentinhaber: BAYER AG, 51368 Leverkusen (DE)
(72) Erfinder: Stendel, Wilhelm, Dr., W-5600 Wuppertal 1 (DE); Pospischil, Reiner, Dr., W-5010 Bergheim (DE); Voege, Herbert, Dr., W-5090 Leverkusen 3 (DE)

(56) Entgegenhaltungen:
- EP-A- 0 124 404
- EP-A- 0 338 821
- US-A- 4 879 117
- DATABASE WPIL Derwent Publications Ltd.,London, GB; DATABSE WPIL, accession no. 84-051553, week 8409; & JP- A - 59008956 (EARTH SEIYAKU KK) 18.01.1984

## Beschreibung

Die vorliegende Erfindung betrifft Mittel zur Bekämpfung von Flöhen an und in der Umgebung von Haustieren, die insektenentwicklungshemmende Substanzen enthalten.

Adulte Flöhe leben normalerweie bevorzugt im Haarkleid ihrer Wirtstiere. Sie ernähren sich von deren Blut und legen ihre Eier im Haarkleid des jeweiligen Wirtstieres ab.

Da die abgelegten Eier nicht am Haarkleid des Wirtes haften bleiben, fallen sie rasch ab und können deshalb vor allem in der Umgebung der Wirtstiere z.B. in deren Lagern und Liegestätten gefunden werden.

Das bedeutet, daß bevorzugt Lager und Ruhestätten der Wirtstiere mit Floheiern verseucht sind, aus denen innerhalb von wenigen Tagen Flohlarven schlüpfen. Man unterscheidet bei den Larven drei Entwicklungsstadien, die jeweils ca. 3 Tage dauern. Das dritte Larvenstadium spinnt ein Kokon und verpuppt sich. Unter günstigen Bedingungen (20 - 30°C, 60 - 80 % rel. Luftfeuchtigkeit) dauert die Entwicklung vom Ei zur Puppe ca. 10 Tage. Nach etwa weiteren 8 Tagen ist die Entwicklung der Flöhe abgeschlossen und in den auf dem Boden (Teppichböden, Schlafplätze usw.) liegenden Kokons befinden sich schlüpfbereite Flöhe. Der Jungfloh kann monatelang in seinem Kokon bleiben.

Unter ungünstigen Bedingungen kann die Entwicklung vom Ei bis zum erwachsenen Jungfloh jedoch auch 4 - 5 Monate dauern. Flöhe benötigen zur Erlangung ihrer Geschlechtsreife, d.h. zur Ablage fertiler Eier, Blut als Nahrungsmittel. Dieses Blut stammt idealerweise vom jeweils spezifischen Wirt. Flöhe können aber auch besonders nach längerem Fasten das Blut anderer Wirte akzeptieren.

Der Flohbefall der Haustiere wie Hunde und Katzen ist für das befallene Tier nicht nur lästig, sondern er fügt den befallenen Tieren auch erhebliche Schmerzen (Stichverletzungen, Juckreiz und Allergien) und Schäden (Blutverlust) zu. Flöhe können außerdem verschiedene Bandwurmarten übertragen. Sie stellen daher auch ein medizinisches Problem für die befallenen Tiere sowie für die Tierhalter dar. Aber auch der Tierhalter kann von Flöhen befallen werden. Bei manchen Menschen führt dies zur Flohstichallergie. Eine wirksame Bekämpfung der Flöhe bei Hunden und Katzen war deshalb von jeher wünschenswert und notwendig, zumal diese Haustiere in steigender Zahl und zunehmend engerem Kontakt mit den Menschen leben.

Es sind bislang zahlreiche insektizide Wirkstoffe zur Bekämpfung von Flöhen bekannt geworden. Solche Wirkstoffe sind z.B. aus der Klasse der Carbamate Propoxur, Bendiocarb, Carbaryl, aus der Klasse der Phosphorsäureester, Fenthion, Diazinon, aus der Klasse der Pyrethroide, Permethrin, Cypermethrin, Resmethrin.

Bei diesen Wirkstoffen handelt es sich um Kontaktinsektizide mit überwiegender Wirkung auf die adulten Flöhe. Bei Eiern oder den verpuppten Stadien der Flöhe zeigen diese Wirkstoffe keine Wirkung.

Die Wirkstoffe werden am Wirtstier angewendet und z.B. durch Sprühen, Duschen, Waschen, als Pulver, im pour-on oder spot-on Verfahren ausgebracht. Sie können auch in Halsbänder eingearbeitet sein (EP-OS 338 821). Die Wirkstoffe werden auch in Form von Aerosolen, Sprühformulierungen, Stäubepulvern in der näheren und weiteren Umgebung der Wirtstiere eingesetzt. Dazu werden Liegestellen sowie die Wohnung und Bereiche außerhalb der Wohnung behandelt.

Es ist auch bekannt, Mitteln mit denen die Umgebung der Wirtstiere behandelt wird, Entwicklungshemmer für Insekten wie Methoprene oder Cyromazine zuzusetzen. Dadurch wird die Entwicklung von adulten Flöhen aus Eiern und Larven und Puppen unterbunden. Allerdings war es bisher erforderlich, die gesamte Umgebung der Wirtstiere d.h. die gesamte Wohnung des Menschen zu behandeln.

Es ist auch bekannt geworden, den Wiederbefall von Hunden und Katzen durch Flöhe dadurch zu verhindern, daß man Hunde und Katzen oral oder parenteral mit Wirkstoffen behandelt, die das Flohwachstum hemmen (EP-OS 255 803).

Es ist außerdem bekannt geworden, Hunde und Katzen gegen Flöhe mit einer Aerosol-Formulierung die Methoprene enthält einzusprühen. Dadurch konnte verhindert werden, daß sich aus den abgesetzten Eiern Flohlarven entwickeln (International Pest Control 27, 1985, S. 10-14).

Es sind auch Tierhalsbänder bekannt geworden, die mit einer Lösung getränkt sind, die Methoprene enthält (EP-OS 124 404).

Alle bisher bekannt gewordenen Bekämpfungsmethoden für Flöhe bei Haustieren auf der Basis von Insektiziden oder Insektenentwicklungshemmern gehen von einer Behandlung des Wirtstieres (Hund oder Katze), seiner Lagerstätten oder seiner gesamten Umgebung aus. Die Behandlung der Wirtstiere allein ist wenig erfolgsversprechend, da über Wochen und sogar Monate die Gefahr des Wiederbefalls aus der Umgebung durch neu geschlüpfte Flöhe gegeben ist. Eine Behandlung nur der Lagerstätte des Wirtstieres ist ebenfalls wenig erfolgversprechend, da die Tiere ihre Lagerstätten oft wechseln und manche Lagerstätten gar nicht bekannt oder (besonders bei der Katze) einer Behandlung nicht zugänglich sind.

Der größte Erfolg ist daher dann zu erzielen, wenn sowohl die Wirtstiere als auch ihre gesamte Umgebung behandelt werden. Die Behandlung der Umgebung ist dabei arbeits- und materialaufwendig. Es sollte daher nach Möglichkeiten gesucht werden, den Arbeitsaufwand sowie das zur Bekämpfung eingesetzte Material zu reduzieren.

Dies wird durch die vorliegende Erfindung ermöglicht.

Die vorliegende Erfindung betrifft:
Neue Halsbänder für Tiere, die Insektenentwicklungshemmer der allgemeinen Formel I 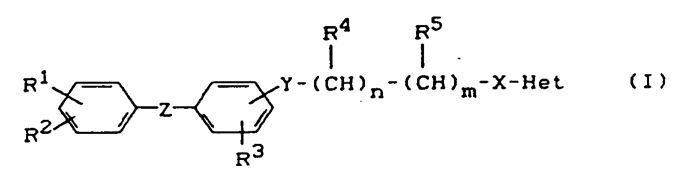
in welcher
- R¹: Wasserstoff, Methyl, Trifluormethyl, Methoxy, Trifluormethoxy, Chlor, Fluor steht
- R²: für Wasserstoff steht,
- R³: für Wasserstoff, Fluor, Chlor, Methyl steht,
- R⁴: für Wasserstoff oder Methyl steht,
- R⁵: für Methyl, Ethyl, Trifluormethyl oder Wasserstoff steht,
- Het: für Pyridyl oder Pyridazinyl steht die gegebenenfalls substituiert sind durch Fluor, Chlor, Methyl, NO₂, Methoxy, Methylmercapto,
- X: für O steht,
- Y: für O steht,
- Z: für O, CH₂ oder -C(CH₃)₂- steht,
- m: für 1 steht,
- n: für 1 steht,
oder der allgemeinen Formel II 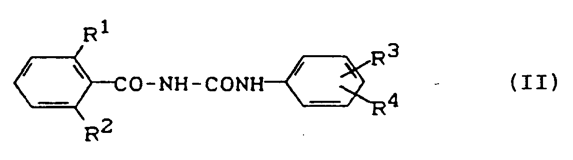
in welcher
- R¹: für Halogen steht,
- R²: für Wasserstoff oder Halogen steht,
- R³: für Wasserstoff, Halogen oder C₁₋₄-Alkyl steht,
- R₄: für Halogen, 1-5-Halogen-C₁₋₄-alkyl, C₁₋₄-Alkoxy, 1-5-Halogen-C₁₋₄-alkoxy, C₁₋₄-Alkylthio, 1-5-Halogen-C₁₋₄-alkylthio, Phenoxy oder Pyridyloxy die gegebenenfalls substituiertsein können durch Halogen, C₁₋₄-Alkyl, 1-5-Halogen-C₁₋₄-alkyl, C₁₋₄-Alkoxy, 1-5-Halogen-C₁₋₄-alkoxy, C₁₋₄-Alkylthio, 1-5-Halogen-C₁-C₄-alkylthio steht,
enthalten zusammen mit Insektiziden aus der Reihe Phosphorsäureester, wie z.B. Fenthion, Carbamate wie z.B. Propoxur, Pyrethroide wie z.B. Cyfluthrin oder Flumethrin.

Die behandelten Tiere sorgen damit, gleichzeitig mit der Verteilung der Floheier, für eine Verteilung des Wirkstoffs gezielt an die Stellen, von denen aus ein Wiederbefall mit Flöhen stattfinden kann. Die Tiere sorgen somit selber für die gezielte Verteilung des Wirkstoffs. Es werden damit weder Stellen, die zu behandeln sind, übersehen, noch wird Wirkstoff an Stellen an denen sich das Wirtstier nicht aufhält unnötig ausgebracht. Außerdem wird der mit der Ausbringung des Wirkstoffs verbundene Arbeitsaufwand eingespart.

Es war überraschend, daß mit dieser Art der Ausbringung des Wirkstoffs eine Wirkung erzielt werden konnte. Bei den bisher bekannten Methoden wurden die Eier oder Larven, die sich in der Umgebung befanden direkt behandelt oder sie kamen auf den Tieren mit dem Wirkstoff in Berührung, wenn diese behandelt wurden.

Es konnte aber nicht erwartet werden, daß durch die erfindungsgemäße Behandlung eine wirkungsvolle Bekämpfung der Flöhe in der Umgebung möglich ist.

Der Behandlungserfolg läßt sich noch dadurch steigern, daß den Halsbändern zur Bekämpfung der adulten Flöhe ein gegen Flöhe wirksames Insektizid (Adultizid) zugesetzt wird.

Als Haustiere seien Hunde und Katzen genannt. Als Flöhe seien genannt Ctenocephalides spec., Puix spec., Xenopsylla spec., Ceratophyllus spec., Echidnophaga spec., Tunga spec.

Im einzelnen seien folgende Verbindungen der Formel I genannt:

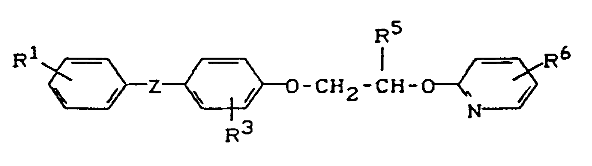

| R¹ | R³ | R⁵ | R⁶ | Z |
|---|---|---|---|---|
| H | H | CH₃ | H | O |
| H | H | CH₃ | 2-Cl | O |
| 5-F | H | CH₃ | H | O |
| H | H | CF₃ | H | O |
| H | H | C₂H₅ | H | O |
| H | H | H | H | O |
| H | H | CH₃ | H | CH₂ |
| H | H | CH₃ | H | C(CH₃)₂ |

Insbesondere seien folgende Verbindungen der Formel II genannt:

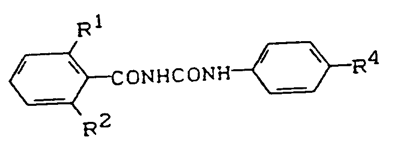

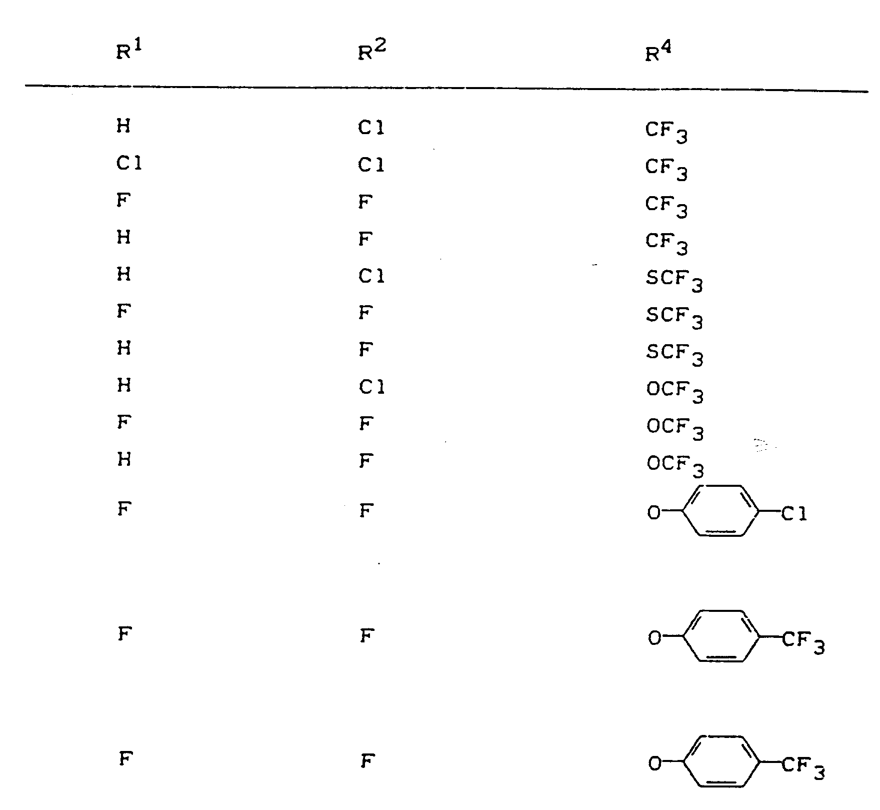

Bei den Insektenentwicklungshemmern besonders hervorgehoben seien die oben genannten substituierten Diarylether der Formel I.

Als Insektizide, die zusätzlich zu den angegebenen Entwicklungshemmer in die erfindungsgemäßen Halsbänder eingearbeitet werden können, seiengenannt: Phosporsäureester wie z.B. Fenthion, Carbamate wie z.B. Propoxur, Pyrethroide wie z.B. Cyfluthrin oder Flumethrin.

Für die Herstellung der erfindungsgemäßen Halsbänder können Polyvinylharze, Polyurethane, Polyacrylate, Epoxyharze, Cellulose, Cellulosederivate, Polyamide und Polyester verwendet werden, die mit den obengenannten Wirkstoffen ausreichend verträglich sind. Die Polymeren müssen eine ausreichende Festigkeit und Biegsamkeit haben, um beim Formen in ein Band nicht zu reißen oder brüchig zu werden. Sie müssen von ausreichender Haltbarkeit sein, um gegen normale Abnutzung beständig zu sein. Außerdem müssen die Polymere eine ausreichende Wanderung der Wirkstoffe an die Oberfläche des Formkörpers zulassen. Diese Eigenschaften werden insbesondere von festen Polyvinylharzen erfüllt, d.h. von Polymerisaten, die durch Polymerisaten einer Vinyldoppelbindung gebildet werden.

Typische Vinylharze sind beispielsweise Polyvinylhalogenide, wie Polyvinylchlorid, Polyvinylchlorid-Vinylacetat und Polyvinylfluorid; Polyacrylat- und Polymethacrylatester, wie Polymethylacrylat und Polymethylmethacrylat; und Polyvinylbenzole, wie Polystyrol und Polyvinyltoluol.

Für die Herstellung der erfindungsgemäßen Halsbänder auf der Basis Polyvinylharz sind die Weichmacher geeignet, die üblicherweise zum Weichmachen von festen Vinylharzen verwendet werden. Der zu verwendende Weichmacher hängt von dem Harz und seiner Verträglichkeit mit dem Weichmacher ab. Geeignete Weichmacher sind beispielsweise Ester von Phosphorsäure, wie Tricresylphosphat, Ester von Phthalsäure, wie Dimethylphthalat und Dioctylphthalat, und Ester von Adipinsäure, wie Diisobutyladipat. Es können auch andere Ester, wie die Ester von Azelainsäure, Maleinsäure, Ricinolsäure, Myristinsäure, Palmitinsäure, Ölsäure, Sebacinsäure, Stearinsäure und Trimellithsäure, sowie komplexe lineare Polyester, polymere Weichmacher und epoxydierte Sojabohnenöle verwendet werden. Die Menge des Weichmachers beträgt etwa 10 bis 50 Gew.-%, vorzugsweise etwa 20 bis 45 Gew.-% der gesamten Zusammensetzung.

In den Halsbändern können noch weitere Bestandteile, wie Stabilisierungsmittel, Spreitmittel, Schmiermittel, Füllstoffe und Färbematerialien, enthalten sein, ohne daß dadurch die grundlegenden Eigenschaften der Zusammensetzung verändert werden. Geeignete Stabilisierungsmittel sind Antioxydationsmittel und Mittel, die die Bänder vor ultravioletter Strahlung und unerwünschtem Abbau während der Bearbeitung, wie Strangpressen schützen. Einige Stabilisierungsmittel, wie epoxydierte Sojabohnenöle, dienen außerdem als sekundäre Weichmacher. Als Schmiermittel können beispielsweise Stearate, Stearinsäure und Polyethylene mit niedrigem Molekulargewicht verwendet werden. Diese Bestandteile können in einer Konzentration bis zu etwa 5 Gew.-% der gesamten Zusammensetzung verwendet werden.

Bei der Herstellung der erfindungsgemäßen Halsbänder auf Vinylbasis werden die verschiedenen Bestandteile nach bekannten Mischverfahren trocken gemischt und nach bekannten Strangpreß- oder Spritzgußverfahren formgepreßt.

Die Wahl des Verarbeitungsverfahrens zur Herstellung der erfindungsgemäßen Halsbänder richtet sich technisch grundsätzlich nach den rheologischen Eigenschaften des Bandmaterials und der Form des gewünschten Bandes. Die Verarbeitungsverfahren können nach der Verarbeitungstechnologie oder nach der Art der Formgebung eingestellt werden. Bei der Verfahrenstechnologie kann man die Verfahren nach den bei ihnen durchlaufenden rheologischen Zuständen unterteilen. Danach kommen für viskose Bandmaterialien Gießen, Pressen, Spritzgießen und Auftragen und für elastoviskose Polymere Spritzgießen, Strangpressen (Extrudieren), Kalandrieren, Walzen und gegebenenfalls Kanten in Frage. Nach Art der Formgebung eingeteilt, lassen sich die erfindungsgemäßen Formkörper durch Gießen, Tauchen, Fressen, Spritzgießen, Extrudieren, Kalandrieren, Prägen, Biegen, Tiefziehen etc. herstellen.

Diese Verarbeitungsverfahren sind bekannt und bedürfen keiner näheren Erklärung. Im Prinzip gelten für andere Polymere die Erläuterungen, die oben beispielhaft für Polyvinylharze gemacht wurden.

Weitere Trägermaterialien für die erfindungsgemäßen Halsbänder sind Polyurethane. Diese werden in an sich bekannter Weise durch Umsetzung von Polyisocyanaten mit höhermolekularen, mindestens zwei gegenüber Isocyanaten reaktionsfähigen Gruppen aufweisenden Verbindungen sowie gegebenenfalls niedermolekularen Kettenverlängerungsmitteln und/oder monofunktionellen Kettenabbrechern hergestellt.

Ihre Herstellung erfolgt nach prinzipiell bekannten Methoden (z.B. vergleiche Europ. Offenlegungsschrift 50 782, Deutsche Offenlegungsschrift 2 715 596 und die darin angegebenen Literaturstellen).

Die Wirkstoffe liegen in den Trägerpolymeren in Konzentrationen von 0,05-20 Gew.-% vor. Bevorzugt sind Konzentrationen von 0,1-5 Gew.-%. Besonders bevorzugt ist eine Wirkstoff-Konzentration um ca. 1 Gewichtsprozent.

In den folgenden Beispielen werden folgende Wirkstoffe eingesetzt:
Pyriproxyfen : 2-[1-Methyl-2-(4-phenoxyphenoxy)-ethoxy]-pyridin
Triflumuron = 1-(2-Chlorbenzoyl)-3-(4-trifluormethoxyphenyl)-harnstoff
Propoxur = 2-Isopropoxyphenyl-N-methylcarbamat
Cyfluthrin : Cyano-(4-Fluor-3-phenoxyphenyl)-methyl-3-(2,2-dichlorvinyl)-2,2-dimethyl-cyclopropancarboxylat.

### Beispiel A

Der Versuch wird mit Halsbändern aus PVC durchgeführt, die 1 Gew.-% der Verbindung Pyriproxyfen der Formel 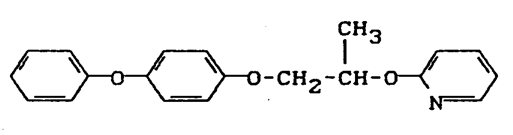
enthalten.

Gekachelte Gehege von ca. 170 x 270 cm werden mit Teppichboden ausgelegt (3,4 m²) wobei der Bereich der Futternäpfe und Katzentoilette frei bleibt und mit je 2 Katzen besetzt, die die zu prüfenden Halsbänder tragen. Nach 1 Woche werden die Teppiche aus den Gehegen herausgenommen und jeweils 20 Probescheiben a 80 mm Durchmesser herausgeschnitten. Die Scheiben sollen möglichst gleichmäßig über den Teppichboden verteilt sein.

Die Teppichbodenscheiben werden mit einer Spatelspitze Blutmehl bestreut (Spezifikation: Blutmehl (pulvrig) für Futterzwecke; Firma Ssniff) und mit Eiern bzw. L1-Larven der zu prüfenden Flohart beimpft. Die Aufbewahrung erfolgt in einem Brutschrank bei 25°C/80 % rel. Feuchte. Die Entwicklung der Flohlarven wird in Abständen von 3 Tagen kontrolliert. Die Schalen, in denen eine Larvenentwicklung erfolgt, werden nach ca. 14 Tagen mit Parafilm oder Tesafilm fest verschlossen, um ein Entkommen adulter Flöhe zu verhindern. Der Test wird eine Woche, nachdem die Flöhe in den unbehandelten Kontrollen geschlüpft sind, beendet. Die Schalen, in denen eine Entwicklung adulter Flöhe erfolgte, werden für 24 Stunden in einem Gefrierschrank bei -15-18°C aufbewahrt und danach ausgewertet. Obwohl aus den Eiern Larven schlüpfen, erfolgt auch nach 16 Wochen keine Entwicklung adulter Flöhe.

### Herstellbeispiele

### Beispiele für Polyurethanbänder:

Die Halsbänder werden nach dem Gießverfahren mit Hilfe einer Bandanlage kontinuierlich hergestellt. Polyether, Wirkstoff bzw. Wirkstoff-Kombination, Farbpaste, Zeolith-Paste, Spreitmittel und Butandiol-1,4 werden in einem beheizbaren Kessel zusammengemischt und auf 60°C erwärmt. Danach wird der Katalysator (Dibutylzinndilaurat) zugemischt.

Die resultierende Mischung ist die Komponente A, die im Gewichtsverhältnis 1:1 mit der Komponente B mittels eines Mischaggregates vermischt wird. Der Mischkopf ist auf einer hin- und hergehenden Changiervorrichtung befestigt. Aus dem Mischkopf fließt das Reaktionsgemisch kontinuierlich auf ein Träger-Material (z.B. Beschichtung auf ein Kunststoffband). Das Reaktionsgemisch beginnt 30 sek nach Verlassen des Mischkopfes zu reagieren und ist nach ca. 60 sek erhärtet.

Anschließend gleitet die Bandware durch eine Kühlzone. Das Produkt ist soweit verfestigt, daß es über ein System von langsam umlaufenden Keilriemen zur Schneidevorrichtung geleitet werden kann.

### Beispiel 1

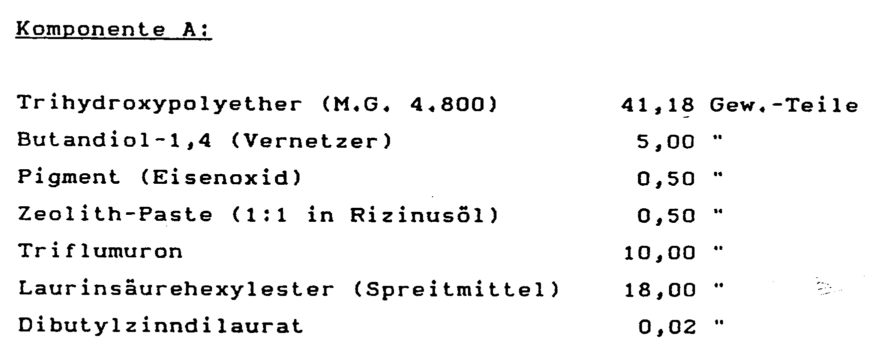

| Komponente B: | |
|---|---|
| Tripropylenglykol-modifiziertes 4,4'-Diisocyanatodiphenyl-methan, Isocyanatgehalt 23 Gew.-% | 24,80 Gew.-Teile |

### Beispiel 2

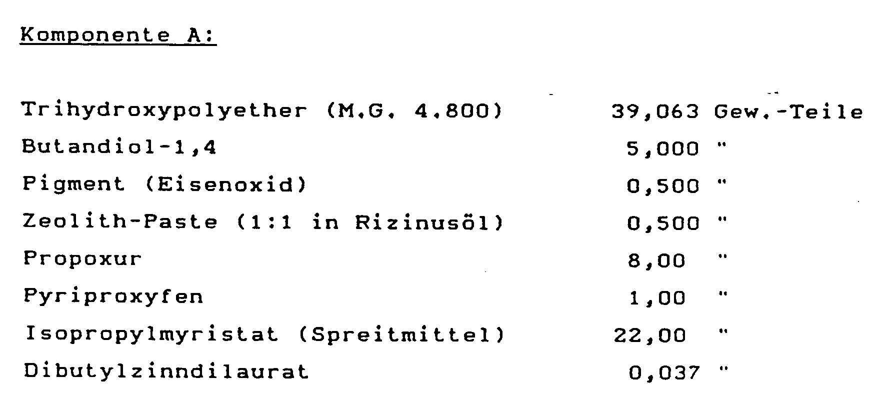

| Komponente B: | |
|---|---|
| Tripropylenglykol-modifiziertes 4,4'-Diisocyanatodiphenyl-methan, Isocyanatgehalt 23 Gew.-% | 23,90 Gew.-Teile |

### Beispiel 3

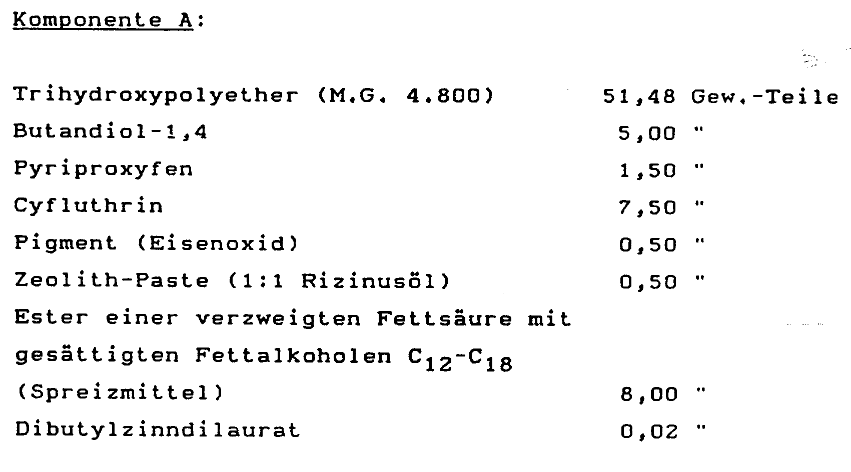

| Komponente B: | |
|---|---|
| Tripropylenglykol-modifiziertes 4,4'-Diisocyanatodiphenyl-methan, Isocyanatgehalt 23 Gew.-% | 25,50 Gew.-Teile |

### Beispiele für PVC-Bänder

In einem hochtourigen Mischer werden Wirkstoff, Farbstoff, PVC-Homopolymer vorgelegt und durchgemischt. Die Tourenzahl des Mischers wird erhöht und die Temperatur auf 60°C erhöht.

Dann werden die Diisobutyladipat, Dioctylphthalat, Netzmittel hinzugefügt und weitergemischt, bis 60°C wieder erreicht ist.

Es wird nun langsam weitergerührt, bis die Mischung trocken und pulverig aussieht.

Jetzt wird Stearinsäure zugegeben.

Die Mischung wird nun schnell unter Rühren abgekühlt.

Diese Mischung wird auf einer Spritzgußmaschine zu Halsbändern der entsprechenden Form verarbeitet.

### Beispiel 4

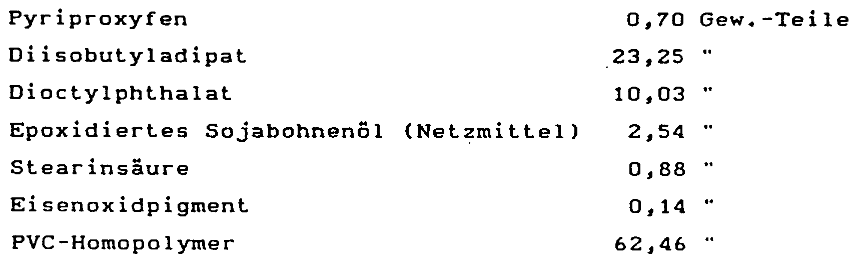

### Beispiel 5

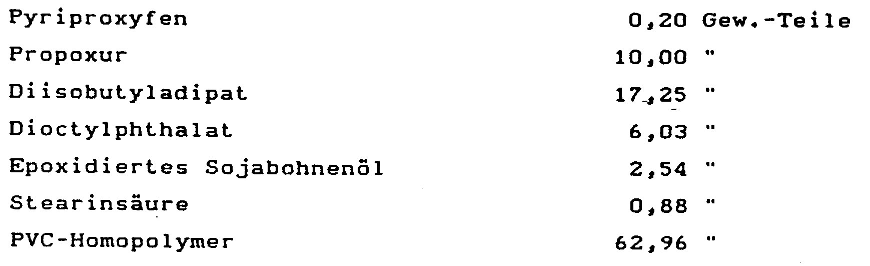

### Beispiel 6

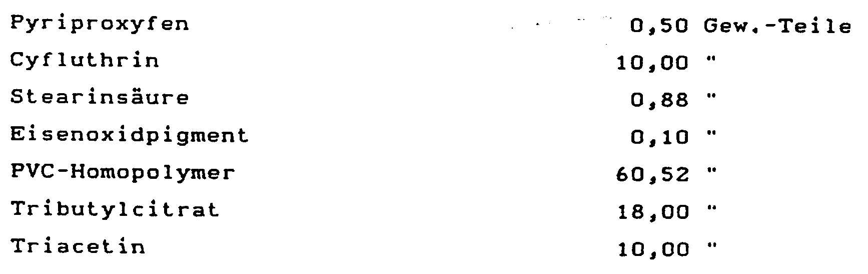

## Patentansprüche

1. Halsbänder für Tiere, die Insektenentwicklungshemmer der allgemeinen Formel I 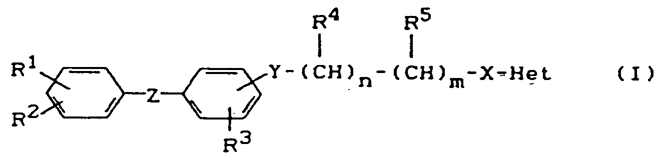 in welcher
R¹ Wasserstoff, Methyl, Trifluormethyl, Methoxy, Trifluormethoxy, Chlor, Fluor steht
R² für Wasserstoff steht,
R³ für Wasserstoff, Fluor, Chlor, Methyl steht,
R⁴ für Wasserstoff oder Methyl steht,
R⁵ für Methyl, Ethyl, Trifluormethyl oder Wasserstoff steht,
Het für Pyridyl oder Pyridazinyl steht die gegebenenfalls substituiert sind durch Fluor, Chlor, Methyl, NO₂, Methoxy, Methylmercapto,
X für O steht,
Y für O steht,
Z für O, CH₂ oder -C(CH₃)₂- steht,
m für 1 steht,
n für 1 steht
oder der allgemeinen Formel II 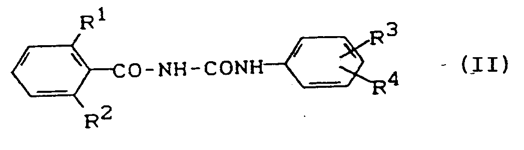 in welcher
R¹ für Halogen steht,
R² für Wasserstoff oder Halogen steht,
R³ für Wasserstoff, Halogen oder C₁₋₄-Alkyl steht,
R₄ für Halogen, 1-5-Halogen-C₁₋₄-alkyl, C₁₋₄-Alkoxy, 1-5-Halogen-C₁₋₄-alkoxy, C₁₋₄-Alkylthio, 1-5-Halogen-C₁₋₄-alkylthio, Phenoxy oder Pyridyloxy die gegebenenfalls substituient sein können durch Halogen, C₁₋₄-Alkyl, 1-5-Halogen-C₁₋₄-alkyl, C₁₋₄-Alkoxy, 1-5-Halogen-C₁₋₄-alkoxy, C₁₋₄-Alkylthio, 1-5-Halogen-C₁-C₄-alkylthio steht.
zusammen mit Insektiziden aus der Reihe Phosphorsäureester, Carbamate, Pyrethroide in Polymeren, aus denen die Halsbänder bestehen, enthalten.

2. Halsbänder gemäß Anspruch 1, dadurch gekennzeichnet, daß sie als Insektenentwicklungshemmer Pyriproxyfen der Formel 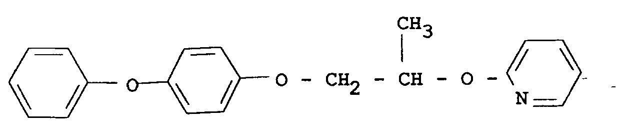 in Polymeren, aus denen die Halsbänder bestehen, enthalten.

3. Halsbänder gemäß Ansprüchen 1 oder 2, dadurch gekennzeichnet, daß sie als Insektizide Fenthion, Propoxur, Cyfluthrin oder Flumethrin enthalten.

4. Halsbänder gemäß Anspruch 1, dadurch gekennzeichnet, daß sie Pyriproxyfen und Propoxur enthalten.

5. Halsbänder gemäß Anspruch 1, dadurch gekennzeichnet, daß sie Pyriproxyfen und Cyfluthrin enthalten.

6. Halsbänder gemäß Anspruch 1, dadurch gekennzeichnet, daß sie Pyriproxyfen und Flumethrin enthalten.

7. Verwendung von Insektenentwicklungshemmern der allgemeinen Formel I oder II gemäß Anspruch 1 zusammen mit Insektiziden aus der Reihe Phosphorsäureester, Carbamate oder Pyrethroide zur Herstellung von Halsbändern für Tiere, die Insektenentwicklungshemmer und Insektizide in Polymeren, aus denen die Halsbänder bestehen, enthalten.

## Claims

1. Animal collars which contain insect-development inhibitors of the general formula I 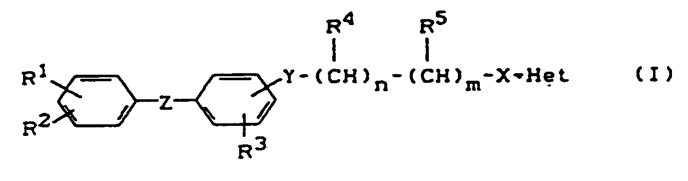 in which
R¹ represents hydrogen, methyl, trifluoromethyl, methoxy, trifluoromethoxy, chlorine or fluorine,
R² represents hydrogen,
R³ represents hydrogen, fluorine, chlorine or methyl,
R⁴ represents hydrogen or methyl,
R⁵ represents methyl, ethyl, trifluoromethyl or hydrogen,
Het represents pyridyl or pyridazinyl which are optionally substituted by fluorine, chlorine, methyl, NO₂, methoxy or methylmercapto,
X represents O,
Y represents O,
Z represents O, CH₂ or -C(CH₃)₂-,
m represents 1,
n represents 1,
or of the general formula II 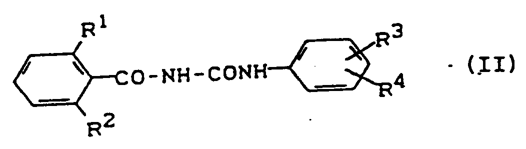 in which
R¹ represents halogen,
R² represents hydrogen or halogen,
R³ represents hydrogen, halogen or C₁₋₄-alkyl,
R⁴ represents halogen, 1-5-halogen-C₁₋₄-alkyl, C₁₋₄-alkoxy, 1-5-halogen-C₁₋₄-alkoxy, C₁₋₄-alkylthio, 1-5-halogen-C₁₋₄-alkylthio, phenoxy or pyridyloxy which can optionally be substituted by halogen, C₁₋₄-alkyl, 1-5-halogen-C₁₋₄-alkyl, C₁₋₄-alkoxy, 1-5-halogen-C₁₋₄-alkoxy, C₁₋₄-alkylthio or 1-5-halogen-C₁-C₄-alkylthio,
together with insecticides from the group comprising phosphoric esters, carbamates and pyrethroids in polymers of which the collars consist.

2. Collars according to Claim 1, characterized in that they contain, as insect-development inhibitor, pyriproxyfen of the formula 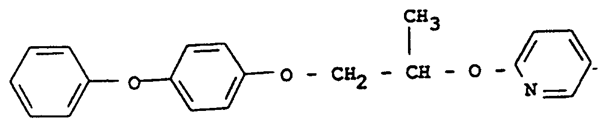 in polymers of which the collars consist.

3. Collars according to Claims 1 or 2, characterized in that they contain, as insecticides, fenthion, propoxur, cyfluthrin or flumethrin.

4. Collars according to Claim 1, characterized in that they contain pyriproxyfen and propoxur.

5. Collars according to Claim 1, characterized in that they contain pyriproxyfen and cyfluthrin.

6. Collars according to Claim 1, characterized in that they contain pyriproxyfen and flumethrin.

7. Use of insect-development inhibitors of the general formula I or II according to Claim 1 together with insecticides from the group comprising phosphoric esters, carbamates or pyrethroids for preparing animal collars which contain insect-development inhibitors and insecticides in polymers of which the collars consist.

## Revendications

1. Colliers pour animaux contenant un inhibiteur de développement des insectes répondant à la formule générale I 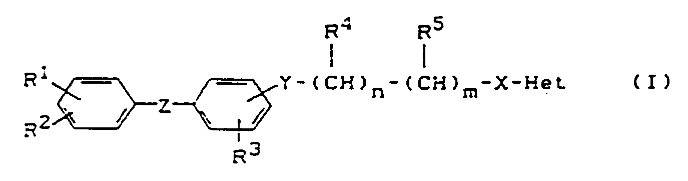 dans laquelle
R¹ signifie l'hydrogène, un groupe méthyle, trifluorométhyle, méthoxy, trifluorométhoxy, le chlore, le fluor,
R² signifie l'hydrogène,
R³ signifie l'hydrogène, le fluor, le chlore, un groupe méthyle,
R⁴ signifie l'hydrogène ou un groupe méthyle,
R⁵ signifie un groupe méthyle, éthyle, trifluorométhyle ou l'hydrogène,
Het signifie un groupe pyridyle ou un groupe pyridazinyle éventuellement substitués par le fluor, le chlore, un groupe méthyle, NO₂, méthoxy, méthylmercapto,
X signifie O,
Y signifie O,
Z signifie O, CH₂ ou -C(CH₃)₂-,
m signifie 1,
n signifie 1,
ou répondant à la formule générale II 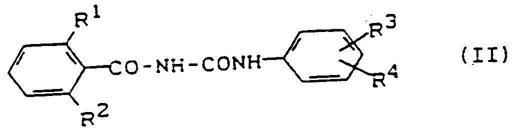 dans laquelle
R¹ signifie un halogène,
R² signifie l'hydrogène ou un halogène,
R³ signifie l'hydrogène, un halogène ou un groupe alkyle en C₁₋₄,
R⁴ signifie un halogène, un groupe 1-5-halogène-C₁₋₄-alkyle, alcoxy en C₁₋₄, 1-5-halogène-C₁₋₄-alcoxy, alkylthio en C₁₋₄, 1-5-halogène-C₁-C₄-alkylthio, phénoxy ou pyridyloxy pouvant éventuellement être substitués par un halogène, un groupe alkyle en C₁₋₄, 1-5-halogène-C₁₋₄-alkyle, alcoxy en C₁₋₄, 1-5-halogène-C₁₋₄-alcoxy, alkylthio en C₁₋₄, 1-5-halogène-C₁₋₄-alkylthio,
ensemble avec des insecticides de la série des esters phosphoriques, des carbamates, des pyréthroïdes dans les polymères dont sont constitués les colliers.

2. Colliers selon la revendication 1, caractérisés en ce qu'ils contiennent comme inhibiteur de développement des insectes le Pyriproxyfen de formule 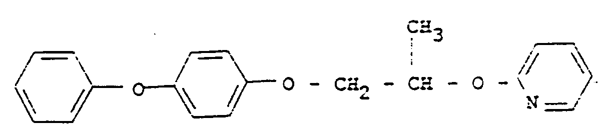 dans les polymères dont le collier est composé.

3. Colliers selon la revendication 1 ou 2, caractérisé en ce qu'ils contiennent comme insecticide le Fenthion, le Propoxur, le Cyfluchrin ou le Flumethrin.

4. Colliers selon la revendication 1, caractérisés en ce qu'ils contiennent du Pyriproxyfen et du Propoxur.

5. Colliers selon la revendication 1, caractérisés en ce qu'ils contiennent du Pyriproxyfen et du Cyfluthrin.

6. Colliers selon la revendication 1, caractérisés en ce qu'ils contiennent du Pyriproxyfen et du Flumethrin.

7. Utilisation des inhibiteurs de développement des insectes de formule générale I ou II selon la revendication 1 ensemble avec des insecticides de la série comportant les esters phosphoriques, les carbamates ou les pyréthroïdes pour fabriquer des colliers pour animaux, contenant des inhibiteurs de développement des insectes et des insecticides dans les polymères dont sont constitués les colliers.
